# EUROPÄISCHE PATENTANMELDUNG

(11) **EP 1 630 339 A2**
(43) Veröffentlichungstag der Anmeldung: **01.03.2006**
(21) Anmeldenummer: 05017942.3
(22) Anmeldetag: 18.08.2005
(51) Int. Cl.: E05F 3/10, F16J 9/00

(54) **Kolben für einen Türschliesser oder für einen Türantrieb**

(30) Priorität: 24.08.2004 DE 102004041099
(71) Anmelder: DORMA GmbH + Co. KG, 58256 Ennepetal (DE)
(72) Erfinder: Wildförster, Thomas, 58332 Schwelm (DE)

(57) **Zusammenfassung**

Die Erfindung betrifft einen Kolben für einen Türschließer, dessen Zahnstange einen Schließkolbenflansch von einem Dämpfungskolbenflansch distanziert, wobei sowohl am Schließkolbenflansch als auch am Dämpfungskolbenflansch einer Innenwand eines Schließergehäuses anliegende Dichtungsringe angeordnet sind. Die Erfindung richtet sich darauf, dass bei beabstandeter Ausbildung der Zahnstange von der Innenwand des Schließergehäuses am Schließkolbenflansch und am Dämpfungskolbenflansch der Innenwand des Schließergehäuses anliegende, über den Außenmantel der Kolbenflansche vorstehende, in Nuten der Kolbenflansche gelagerte Führungsringe angeordnet sind.

## Beschreibung

Die Erfindung betrifft einen Kolben für einen Türschließer oder für einen Türantrieb, bestehend aus einem Schließkolbenflansch und einem Dämpfungskolbenflansch und einer den Schließkolbenflansch vom Dämpfungskolbenflansch distanzierenden Zahnstange mit am Schließkolbenflansch und am Dämpfungskolbenflansch angeordneten, einer Innenwand eines Schließergehäuses anliegenden Dichtungsringen.

Kolben der eingangs genannten Gattung bestehen im Regelfall aus Metall, bevorzugt aus Stahl, wobei das Schließergehäuse aus dem gleichen oder einem anderen geeigneten Werkstoff bestehen kann. Der Abdichtung des im Schließergehäuse verschiebbaren Kolbens dienen dabei an den Kolbenflanschen angeordneten, in Nuten der Kolbenflansche gelagerte O-Ringe. Aufgrund der starken Beanspruchung unterliegen die O-Ring-Dichtungen einem starken Verschleiß. Ein besonderer Nachteil besteht darin, dass der O-Ring zur Gewährleistung einer ausreichenden Führungsfunktion mit einer vorbestimmbaren Anpresskraft an der Innenwandung des Schließergehäuses anliegen muss. Diese Maßnahme verhindert andererseits einen begrenzten, aus Gründen der erforderlichen Schmierung gewünschten Durchtritt des Fluidrriediums im Bereich des O-Ringes, ohne dass hierfür zusätzliche technisch aufwendige Maßnahmen in Kauf genommen werden müssen.

Bei einer gattungsgemäßen Vorrichtung nach EP 0 562 459 A1 liegt die einen Schließkolben von einem Öffnungskolben distanzierende Zahnstange über Teile ihres Umfanges an der Innenwand des Schließergehäuses an. Zur Verminderung der Reibung und des Verschleißes ist der Kolben im Bereich der Zahnstange auf der dem Gehäuse zugewandten Fläche mit einer Gleitzwischenlage oder einer Gleitbeschichtung versehen. Die an den Kolbenflanschen angeordneten Dichtungsringe haben zusätzlich eine Ventilfunktion und lassen den begrenzten Durchfluss eines Fluidmediums zu.

Aufgabe der Erfindung ist es, einen Kolben für einen Türschließer oder einen Türantrieb dahingehend zu verbessern, dass - insbesondere bei Verwendung unterschiedlicher Materialien für Kolben und Schließergehäuse - die für die Führungsfunktion des Kolbens im Schließergehäuse bestimmten Bauteile hinsichtlich ihrer Anordnung und des verwendeten Materials ausschließlich auf die Führungsfunktion und die für die Dichtungsfunktion bestimmten Bauteile ausschließlich auf die Dichtungsfunktion, d. h. auch auf eine vorbestimmbare begrenzte Durchlässigkeit eines Fluidmediums abgestimmt werden können.

Die Erfindung löst die gestellte Aufgabe mit der Lehre nach Anspruch 1.

Nach Maßgabe der Erfindung können sowohl Führungsringe als auch Dichtungsringe mit Bezug auf den jeweiligen Anwendungsfall optimiert angeordnet und ausgebildet werden, d. h. der den Außenmantel eines Kolbenflansches überragende Bereich eines Führungsringes kann beispielsweise exakt auf den den Außenmantel eines Kolbenflansches überragenden Bereich eines Dichtungsringes abgestimmt werden, womit bei definierter Führung des Kolbens eine definierte Schmierung erfolgen kann. Die Dichtung, die z. B. ein O-Ring sein kann, unterliegt dabei einem wesentlich geringeren Verschleiß. Dieses zeigt sich auch darin, dass die Kolbendichtung durch die Führungsringe vor einer Verschmutzung durch in dem Dämpfungsmedium enthaltenen Partikeln geschützt werden. Die Führung und Abdichtung des Kolbens beschränkt sich ausschließlich auf den Bereich der Kolbenflansche.

Weitere vorteilhafte Ausgestaltungen der Erfindung sind Gegenstand der Unteransprüche.

Da z. B. der Kolben aus Stahl und das Schließergehäuse aus Aluminium bestehen, hat es sich als vorteilhaft erwiesen, dass die Führungsringe aus Kunststoff bestehen, wobei mit Bezug auf die Längserstreckung des Kolbens am Schließkolbenflansch und am Dämpfungskolbenflansch beidseitig eines Dichtringes jeweils ein Führungsring angeordnet ist, wenngleich grundsätzlich die Zuordnung jeweils eines Führungsringes ausreicht, hat sich die vorgenannte Maßnahme vorteilhaft zur Erzielung einer Reibungsminderung, einer Verschleißminderung sowie zur Erzielung eines besseren Wirkungsgrades als vorteilhaft erwiesen.

Da die Führungsringe aus einem härteren Material als die Dichtungsringe bestehen, kann in weiterer Ausgestaltung der Erfindung die Nuttiefe der den Führungsring aufnehmenden Nut kleiner sein als die Nuttiefe der den Dichtring aufnehmenden Nut.

Im Ergebnis wird mit der Erfindung eine Führung und Abdichtung für einen in einem Schließergehäuse verschiebbar gelagerten Kolben erzielt, bei dem aufgrund der erfindungsgemäßen Ausgestaltung der Führungs- und Dichtelemente bei zuverlässiger Wirkungsweise eine längere Standzeit erreicht werden kann.

Die Erfindung wird nachfolgend anhand eines Ausführungsbeispieles näher erläutert.

Es zeigen:
- Figur 1:: Eine Seitenansicht eines Kolbens,
- Figur 2:: den Schnitt nach der Linie A-A nach Figur 1.

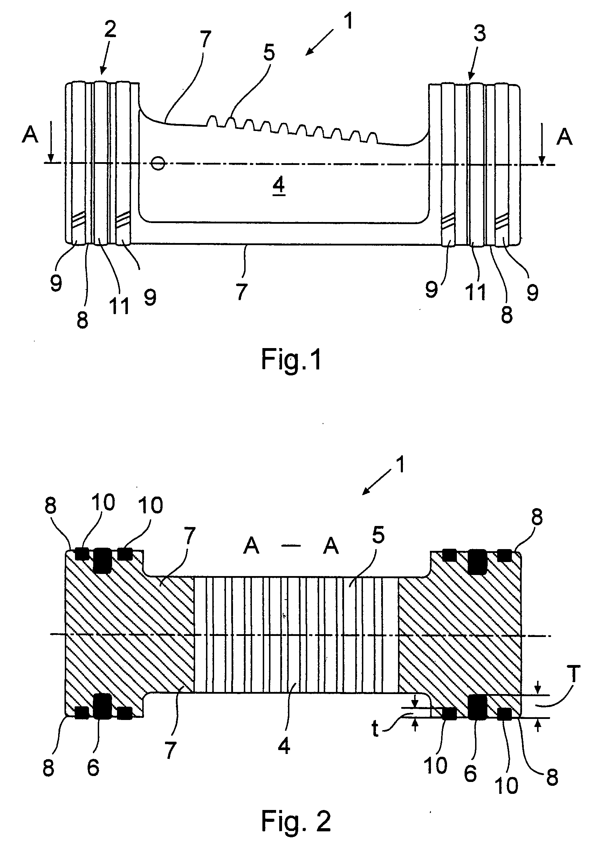

Ein in einem nicht dargestellten Schließergehäuse verschiebbar geführter Kolben 1 besteht in seinem wesentlichen Aufbau aus einem Schließkolbenflansch 2 und einem Dämpfungskolbenflansch 3, die voneinander durch eine Zahnstange 4 distanziert bzw. über die Zahnstange 4 miteinander verbunden werden. Der Kolben 1 ist z. B. als so genannter einseitig offener Kolben ausgebildet, d. h. die Verzahnung 5 befindet sich an einer Außenseite der Zahnstange 4 und kämmt in bekannter Weise mit einem im Schließergehäuse gelagerten, nicht dargestellten Ritzel. Wie die Figuren 1 und 2 erkennen lassen, ist ein Außenmantel 7 der Zahnstange 4 von dem nicht dargestellten Schließergehäuse beabstandet ausgebildet, d. h. zwischen dem Außenmantel 7 und dem Schließergehäuse besteht im Bereich der Zahnstange 4 keine Berührung. Die Berührung zwischen dem Kolben 1 und dem Schließergehäuse beschränkt sich auf den Bereich des Schließkolbenflansches 2 und des Dämpfungskolbenflansches 3, wozu im Bereich der beiden vorgenannten Kolbenflansche 2 und 3 jeweils eine Nut 11 für die Aufnahme eines Dichtungsringes 6 angeordnet ist und jeweils beidseitig neben dem Dichtungsring 6 Nuten 9 für die Aufnahme von Führungsringen 10 angeordnet sind. Figur 2 lässt erkennen, dass eine Tiefe t der Nuten 9 für die Führungsringe 10 kleiner ist als eine Tiefe T der Nuten 11 für die Dichtungsringe 6. Sowohl die Dichtungsringe 6 als auch die Führungsringe 10 stehen um ein definiertes Maß über den Außenmantel 8 der Kolbenflansche 2 bzw. 3 über; mit Bezug auf den Dichtungsring 6 wird dieses Maß durch den gewünschten Wirkungsgrad der Dichtungsfunktion bestimmt.

### Bezugszeichenliste

- 1: Kolben
- 2: Schließkolbenflansch
- 3: Dämpfungskolbenflansch
- 4: Zahnstange
- 5: Verzahnung
- 6: Dichtungsring
- 7: Außenmantel
- 8: Außenmantel
- 9: Nuten
- 10: Führungsring
- 11: Nuten

- t: Nuttiefe
- T: Nuttiefe

## Patentansprüche

1. Kolben (1) für einen Türschließer oder für einen Türantrieb, bestehend aus einem Schließkolbenflansch (2) und einem Dämpfungskolbenflansch (3) und einer den Schließkolbenflansch (2) vom Dämpfungskolbenflansch (3) distanzierenden Zahnstange (4), mit am Schließkolbenflansch (2) und am Dämpfungskolbenflansch (3) angeordneten, einer Innenwand eines Schließergehäuses anliegenden Dichtungsringen (6), wobei ein Außenmantel (7) der Zahnstange (4) von der Innenwand des Schließergehäuses beabstandet ausgebildet ist und am Schließkolbenflansch (2) und am Dämpfungskolbenflansch (3) der Innenwand des Schließergehäuses anliegende, über einen Außenmantel (8) der Kolbenflansche (2, 3) vorstehende, in Nuten (9) der Kolbenflansche (2, 3) gelagerte Führungsringe (10) angeordnet sind.

2. Kolben nach Anspruch 1, **dadurch gekennzeichnet, dass** die Führungsringe (10) aus Kunststoff bestehen.

3. Kolben nach Anspruch 1 oder 2, **dadurch gekennzeichnet, dass** mit Bezug auf die Längserstreckung des Kolbens (1) am Schließkolbenflansch (2) und am Dämpfungskolbenflansch (3) beidseitig eines Dichtringes (6) jeweils ein Führungsring (10) angeordnet ist.

4. Kolben nach einem der Ansprüche 1 bis 3, **dadurch gekennzeichnet, dass** eine Nuttiefe (t) einer den Führungsring (10) aufnehmenden Nut (9) kleiner ist als eine Nuttiefe (T) einer den Dichtring (6) aufnehmenden Nut (11).
